Europäisches Patentamt

European Patent Office

Office européen des brevets

(19)

(11) Publication number: **0 201 121 B1**

(12) **EUROPEAN PATENT SPECIFICATION**

(45) Date of publication of patent specification: **08.07.92**

(51) Int. Cl.5: **G02B 6/28**, C03B 37/14, C03B 37/025

(21) Application number: **86200649.1**

(22) Date of filing: **16.04.86**

(54) Method of manufacturing a passive fibre-optic component.

(30) Priority: **19.04.85 NL 8501147**

(43) Date of publication of application:
**12.11.86 Bulletin 86/46**

(45) Publication of the grant of the patent:
**08.07.92 Bulletin 92/28**

(84) Designated Contracting States:
**DE FR GB IT NL SE**

(56) References cited:
**CH-A- 575 126**
**US-A- 3 278 283**
**US-A- 3 350 183**
**US-A- 4 179 185**

**PATENTS ABSTRACTS OF JAPAN, vol. 6, no. 112 (P-124)[990], 23rd June 1982; & JP - A - 57 41 602 (NIPPON DENSHIN DENWA KOSHA) 08-03-1982**

(73) Proprietor: **N.V. Philips' Gloeilampenfabrieken**
**Groenewoudseweg 1**
**NL-5621 BA Eindhoven(NL)**

(72) Inventor: **Severijns, Adrianus Petrus**
**c/o INT. OCTROOIBUREAU B.V. Prof. Holstlaan 6**
**NL-5656 AA Eindhoven(NL)**
Inventor: **Severin, Petrus Johannes Wilhelmus**
**c/o INT. OCTROOIBUREAU B.V. Prof. Holstlaan 6**
**NL-5656 AA Eindhoven(NL)**
Inventor: **Van Bommel, Cornelus Hubertus Maria**
**c/o INT. OCTROOIBUREAU B.V. Prof. Holstlaan 6**
**NL-5656 AA Eindhoven(NL)**

(74) Representative: **Melio, Jan Dirk et al**
**INTERNATIONAAL OCTROOIBUREAU B.V.**
**Prof. Holstlaan 6**
**NL-5656 AA Eindhoven(NL)**

Rank Xerox (UK) Business Services

## Description

The invention relates to a method of manufacturing a passive fibre-optic component which comprises at least two optical fibres each having a core of core glas, a cladding of cladding glass with a refractive index lower than that of the core glass, and an outer coating.

A method for manufacturing a fibre-optic component is known, for example, from US-A 4179185. This known method more particularly relates to the manufacturing of a coupler with a plurality of optical filaments, the end portions of which are disposed in fused, side-by-side relation to form a unitary, multi-cored structure. The end of the multi-cored structure is plannar and is coated with a light reflecting material. The optical energy in one fibre is propagated in all the fibres by reflection on the light reflecting material. This method is only suitable for the manufacture of this kind of components. The diameter of the multi-cored structure depends on the number of filaments in the coupler.

From US-A 3148967 a method is known for the manufacturing of optical image transfer devices of the type comprising a very large number of fibres. The relative arrangement and the shape of the fibres after collapsing are not predictable but also not relevant for this type of components.

An other method for manufacturing a fibre-optic component is known, for example, from US-A 4291940 and from EP-A 0 123 396. This known method more particularly relates to the manufacture of couplers according to a hot processing method, the so-called fused biconical taper technique, in which two fibres are twisted and are then heated and stretched in such a manner that a coupler with a symmetrical biconical configuration is obtained. In this method, the risk of damage of the fibre and of deformation of the fibre core is comparatively high. The method is only suitable for the manufacture of given components, is not readily reproducible and is not suitable for use in mass production. Furthermore the input fibre can be recognized on the output side, which means that there is no uniform distribution of the input power.

A method according to the preamble is known from GB-A 1 427 539. In this method the fibres are not twisted but are drawn together with the glass tube wherein they are inserted to provide a tapered zone from which interstices between fibres have been eliminated. The presence of a taper in said zone means that the diameter of the end face has to be selected by siting it at an appropriate distance along the length of said zone. Considering the core diameter of the fibres to be treated, 50 μm or smaller, it will be difficult to select the correct diameter of the end face within close tolerances. The taper angle is dependent on several parameters and may vary from fibre bundle to fibre bundle.

The invention has for its object to provide a method of manufacturing passive fibre-optical components, which is flexible and by means of which different types of components can be manufactured on a large scale in an economical manner and with the required precision.

According to the invention, this object is mainly achieved in that a part of each fibre is bared by removal of the outer coating over a given length from one end of the fibre, and the bare parts of the fibres are subjected to an etching treatment whereby a portion of the etched part of each fibre is given a conical shape, after which the etched portions of the fibres are arranged against each other in a tube of a glass having a refractive index lower than that of the core glass of the fibres, and by the application of heat the tube is fused to the fibres and the fibres are fused together in their bare parts the fused fibre bundle being provided with a polished end face, whereby

- by the etching treatment the bare part of each fibre is also given a cylindrical end portion which adjoins the conical portion at the narrow end thereof,
- the tube is a capillary tube which is sealed at one end, and the tube and at least the cylindrical end portions of the fibres inserted therein are softened by heat while the tube is evacuated so that the wall thereof collapses against the fibres and, while maintaining a circular cross-section under the influence of surface tension, deforms said end portions of the fibres to eliminate the interstices between them and give these portions of the fibres collectively a circular cross-section so that they form with the tube a solid rod of circular cross-section, the tube being fused by the heat to said end portions of the fibres, and the sealed end of the rod is removed to form on the rod an end face in which the ends of said end portions of the fibres are exposed, the etching of said end portions of the fibres being such that the diameter of said circular cross-section of said end portions after said deformation is substantially equal to the diameter of the core of a single fibre,
- and said end face being ultimately subjected to a polishing and finishing treatment to finally obtain a fused fibre head.

By means of the method according to the invention different components, such as two-way and multiple-way splitters, directional couplers, transmissive and reflective star couplers, multiple connectors and the like, can be manufactured with the required micron accuracy in mass production and in a comparatively inexpensive manner. The fibre head itself may constitute a fibre optic component or it may be coupled with a single fibre or with another identical or similar fibre head to form a passive optic fibre component. Since the process parameters are known and controllable and the product is accessible for inspection and verification, the process is also reproducible and suitable for automatization. As the end portion of each fibre is cylindrical and as subsequently the rod is also cylindrical at least over a certain length and as it has a predetermined diameter, no special diameter of the end face has to be selected. The end face may be sited along the cylindrical part of the rod within large tolerances.

Due to the conical portion situated between the cylindrical end portion and the unetched cladding of the fibres a strong and abrupt bending of the fibre-cores during the fusion step is prevented and a progressive increase of cross-section of the fused cylindrical fibre ends towards the unetched fibre portions within the fused fibre head is obtained.

As the capillary tube with the fibres inserted therein is not drawn down, the wall thickness of the capillary tube is not reduced so that in the end face the fused fibre ends are surrounded by a relatively large annular area formed by the wall of the capillary tube and offering a large bonding surface. During heating, the capillary tube will flow and shrink under the influence of vacuum force and of the atmospheric pressure whilst maintaining the circular cross-section due to surface tension, the end portions of the fibres being deformed into a rotational symmetrical pattern within the shrunk tube. The controlled reproducibility obtained in this way is essential for automatic production. No external forces, which could damage the fibres, are exerted on the fibres. In the method according to the invention, both step index fibres and graded-index fibres can be used as well as monomode and multimode fibres. Since the capillary tube serves as a cladding in the finished product, the tube should be made of a glass having a refractive index lower than that of the core glass of the fibres preferably equal to that of the cladding glass. The glass of the capillary tube preferably has a softening temperature slightly higher than that of the core glass. Given a suitable softening temperature and a suitable refractive index of the core glass of the fibres to be fused together, preferably a capillary tube of quartz glass is used. The outer coating of the fibres generally consists of a synthetic material, such as for example, a UV curing acrylate. As the fused fibre ends have a circular cross-section substantially equal to the cross-section of a single fibre core, for instance a splitter is simply assembled, by glueing the single fibre to be coupled in a capillary tube having a diameter substantially equal to the diameter of the fibre head. In a known measuring arrangement, the fibre head and the individual fibre are aligned with respect to each other so as to obtain the best compromise between a maximum total signal transmission and a uniform distribution of power over the output ports; subsequently, at the coupling area, glue, for example UV curing glue of the correct refractive index is added. After the distribution over the fibres has been verified and, as the case may be, has been corrected the UV curing glue is cured. Ultimately, the assembly is encapsulated in a suitable quartz tube, for instance by means of epoxy.

For assembling a coupler it is sufficient to couple two fused fibre heads obtained by the method according to the invention and having the required number of fibres with their end faces to each other, as the diameters of the fibre heads and of the fused fibre ends are the same. If the cladding in the cylindrical end portions of the fibres is completely etched away, a loss-free coupler is formed with rotational symmetry and with complete mixing when using step-index fibres; when using graded-index fibres, a low-loss coupler is obtained with rotational symmetry and with only a limited amount of coupling, but the input fibre can be recognized.

If the cladding of the fibres is not entirely etched away, no or substantially no mixing occurs in the fibre head. If no mixing occurs at all, the degree of coupling can be completely controlled by relative rotation of the two fibre heads. With step index fibres, a symmetrical directional coupler is thus obtained with an arbitrary fixed or variable coupling ratio and with low losses due to a remaining central line of cladding glass.

If the cladding of the fibres is entirely etched away, there is a base level of coupling which depends upon the length of the fibre head and to which a variable extent of coupling can be added by relative rotation of the two fibre heads. For graded-index fibres, the power is rather confined to the core;even if the cladding of the fibres is entirely removed, there is the possibility of an incomplete mixing taking place; however, by rotation-symmetrical positioning, a loss-free directional coupler with a low coupling ratio can be obtained after all. By rotation, the losses increase with the coupling ratio due to the fact that the centre lines of the fibres do not coincide.

The same coupling ratio can be reached only by a larger angle of rotation if the cladding is not entirely removed. The losses increase due to the fact that the centre lines do not coincide. With a coupling ratio of 1 : 1, the loss is equal to the square of the loss of the two-way splitter.

Couplers consisting of two, three of four input and output ports and manufactured by means of the method according to the invention form a new class of products. Since such couplers with step-index fibres are loss-free and can be used more widely than those with graded-index fibres, the advantages obtained by the use of step-index fibres instead of graded-index fibres in networks, especially local area networks in which many passive fibre-optic components are required, are evident. Joining an M fibre head to an N fibre head gives rise to components with special properties, which may be useful in fibre optic networks.

Star couplers form an extension of the aforementioned series of components and may be composed of graded-index fibres or of step-index fibres. Since in a star coupler with step-index fibres a complete mixing takes place, the input power is distributed equally over all the fibre cores so that the individual fibres cannot be distinguished. In such a star coupler for instance two multiple fused fibre heads are coupled to each other directly with their end faces. As in a star coupler composed of graded-index fibres equal distribution of the input power over all the fibres does not take place, the two fibre heads have to be coupled to each other by means of a mixing element like a mixing rod or graded-index rod.

A fibre head obtained by means of the method according to the invention provides an ideal possibility for transmitting laser power. By the use of a bundle of fibres having at one end a fibre head according to the invention and a number of step-index fibres, the cladding being entirely etched away and whose free ends are finished to form individual fibre heads, the power of a single laser can be used for welding or soldering on several spots at a time. In the fibre head the input laser power is mixed by coupling in such a manner that all fibres transmit the same power at the output end. Furthermore the shape of the output fibre head can be adapted to the shape of the workpiece.

In the above embodiments of the method according to the invention it is assumed that the fibres to be fused together fit into the capillary tube with their bare non-etched cladding with a narrow tolerance and in a regular pattern. This assumption is limited to a maximum number of five fibres. When six or more fibres or a larger number of fibres are to be processed, it is not possible to pack the fibres tightly in the capillary tube since space larger than a fibre remains at the centre of the tube. In order nevertheless to be able to carry out the process, a preferred embodiment of the method according to the invention of manufacturing a component having at least six optical fibres is characterized in that the fibres are regularly distributed around the inner circumference of the capillary tube and are supported there by a cylindrical supporting member which is arranged centrally in the capillary tube, the fibres being adhered with their bare cladding to the inner surface of the capillary tube by a thermal pretreatment, whereafter the supporting member is removed and fusion of the tube with the etched end portions of the fibres takes place. During fusion of the capillary tube with the end portions of the fibres, the central space becomes filled by the fibres, which are each deformed into a sectorial cross-section and which are uniformly arranged in a symmetrical pattern around the inner circumference of the capillary tube.

It is an essential characteristic of the method according to the present invention that the products show a distribution of fibres with circular symmetry. This implies that each segment radiates into the opposite end with the same property so that there is no difference in the mode effects whatever input fibre is excited and whatever output fibre is measured. Not only the energy is distributed equally over the fibres, but also the mode spectrum is the same for all fibres. This has advantages for following fibre-optic components downstream in a network.

A fibre head manufactured by the method according to the invention can even act as a fibre-optic component, or as input and/or output end of a bundle of fibres. In the embodiments already described, the fibre head constitutes a standard fibre-optic component which serves as a basic element for a complete series of different composite fibre-optic components.

The invention will be described more fully with reference to the drawings. In the drawings:

Fig. 1a is an axial sectional view of an initial optical fibre, drawn to a greatly enlarged scale,

Fig. 1b is a similar view of the optical fibre after the etching treatment,

Figures 2a, 2b and 2c are axial sectional views, drawn to an enlarged scale, of a capillary tube in successive processing stages,

Figures 3a to 3i show successive steps in the manufacture of a splitter by means of the method according to the invention, and

Figures 4a, 4b and 4c show another embodiment.

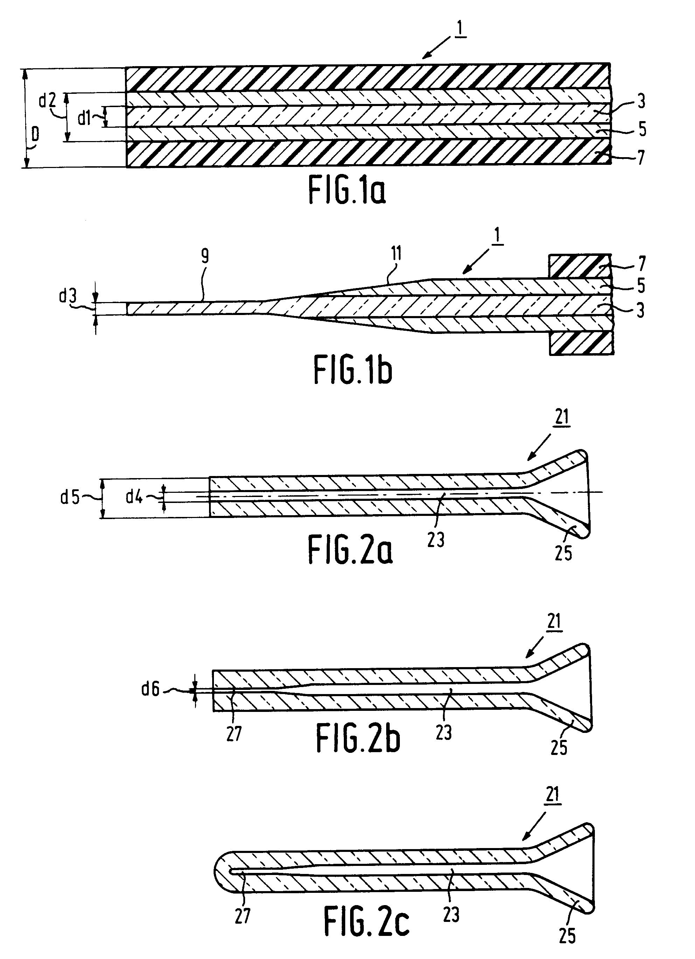

For the manufacture of a fibre-optic component by means of the method according to the invention, first a number of optical fibres of the composition shown in Fig. 1a are cut to a desired length, which may in practice be approximately 1 m.

The optical fibre 1 shown in Fig. 1a comprises a glass core 3 having a diameter d1, a glass cladding 5 having a diameter d2 and an outer protective coating 7 having a diameter D. The cladding 5 is made of a glass having a refractive index lower than that of the core glass. The coating 7 generally consists of a synthetic material, such as a UV curing acrylate. A commonly used optical fibre has a diameter D of 250 $\mu$m, while the cladding 5 has a diameter d2 of 125 $\mu$m and the core 3 has a diameter d1 of 50 $\mu$m. For preparing the fibres, first the coating 7 is removed over a length of a few cms from one end of each fibre by immersing this portion of the fibre in dichloromethane or by burning with a flame. Subsequently, the portions of the fibres thus bared are subjected to an etching treatment in such a manner that over a length of approximately 1 cm a cylindrical etched end portion 9 is obtained adjoining a conical etched intermediate portion 11 which in turn adjoins the non-etched bare cladding 5 having its original diameter d2. Depending upon the desired properties of the fibre-optic component to be manufactured, the etching treatment can be carried out so that the cladding 5 is only partly removed at the cylindrical etched end portion 9 or is entirely removed at this portion, that is to say, removed as far as the interface between cladding and core in which case the core 3 retains its original diameter d1. For given applications, for example for the manufacture of a splitter having at most four fibres, or with the use of graded index fibres, the etching treatment is continued until also a part of the core is etched away so that the cylindrical etched end portion 9 has a diameter d3 which is smaller than the original diameter d1 of the core 3. This situation is shown in Fig. 1b. The etching treatment is effected by immersing the fibres in a HF solution with a concentration of for instance 50 %. The conical etched portion 11 is obtained by moving the fibres up and down during etching; the stroke of this movement determines the length of the conical portion 11, which is of the order of millimetres to centrimetres. The diameter d3 of the cylindrical etched end portion 9 is determined so that when the end portions of the fibres are subsequently fused together in the required number they will together have a cross-section substantially identical in shape and size to that of a single fibre core 3.

Figures 2a, 2b and 2c show successive steps in the processing of a capillary tube 21 required for carrying out the present example of the method according to the invention. The capillary tube 21 is obtained by drawing a long tube from a preform of quartz glass, then subdividing this tube into capillary tubes 21 each having a length of about 3 to 6 cm., approximately equal to the length of the bare portions of the fibres. The glass of the tube 21 has a refractive index lower than that of the core glass of the fibres.

The diameter d4 of the capillary duct 23 in each tube 21 is chosen so that the bare portions of the required number of fibres will fit into it with a small amount of clearance of about 10 $\mu$m. In view of the required shape accuracy and in order to obtain a sufficient mechanical strength of the tube 21 and of the ultimate product, a comparatively large wall thickness of 1 to 2 mm is chosen. For the usual products, the duct 23 has a diameter d4 of 260 to 400 $\mu$m, while the tube 21 has a diameter d5 of 2.5 to 6 mm. The tube 21 shown in Fig. 2a is formed with a funnel 25 at one end. The funnel 25 facilitates the insertion of the fibre ends into the capillary tube and offers a bonding surface for glueing the outer coating of the fibres to the capillary tube.

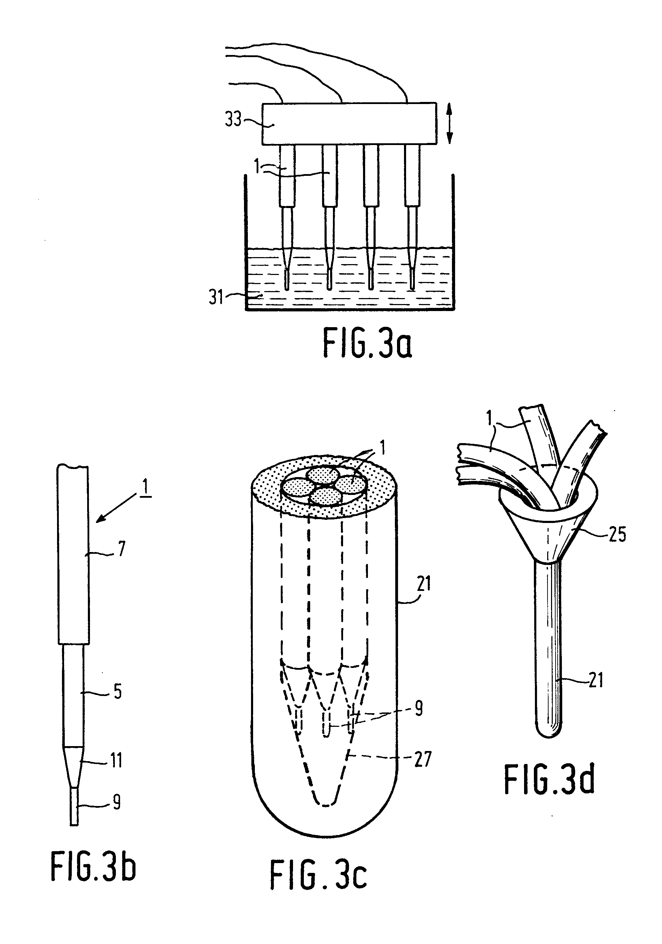

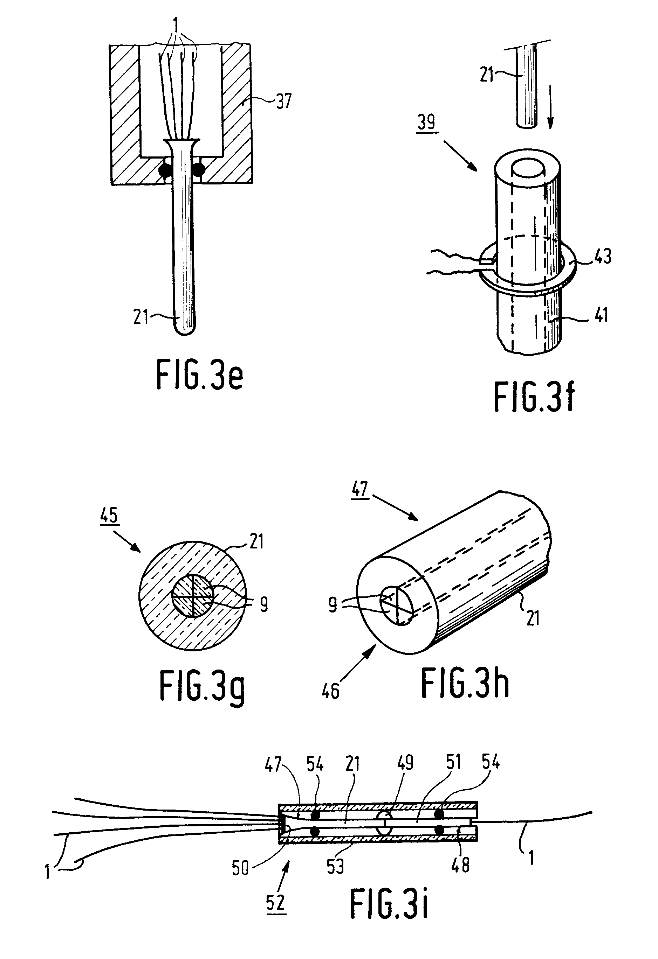

For receiving fibres whose cores are etched down to a smaller diameter than the original diameter, and in order to obtain an optimum positioning of the fibre ends the capillary duct 23 is provided at the end remote from the funnel 25 with a restriction 27, as shown in Fig. 2b. The restriction can be obtained by heating and shrinking under the influence of surface tension or by drawing down. The restriction 27 is given a diameter d6 such that the cylindrical etched end portions 9 of the fibres will fit into it. Subsequently, the tube 21 is sealed at the end with the restriction 27. Fig. 2c shows the finished capillary tube 21. However, the process of restricting and sealing the capillary tube 21 may also take place at a later stage. Hereafter an embodiment of the method according to the invention for manufacturing a splitter having four output ports will be described. Figures 3a to 3i show diagrammatically the successive steps. Fig. 3a shows diagrammatically the etching of four fibres 1 in an etching bath 31. For this purpose, the fibres 1 are fixed in a holder 33, which can be moved up and down. Fig. 3b shows a fibre 1 after the etching treatment with the cylindrical etched end portion 9 already described, the conical etched portion 11, the cladding 5 and the outer coating 7. The bare portions of the four fibres prepared in this manner are then inserted into the capillary tube 21, into which the fibres fit with a narrow tolerance. This situation is shown in Fig. 3c, which shows only a part of the capillary tube which is sealed already. As shown in Fig. 3d the fibres 1 are arranged with their bare parts in the capillary tube 21, the coating 7 terminating at the funnel 25. Subsequently, the capillary tube 21 is connected to a vacuum chamber 37 and is evacuated to a pressure lower than $10^{-1}$ mbar, which stage is shown diagrammatically in Fig. 3e. The capillary tube 21 is then degassed by arranging it above the furnace 39 shown in Fig. 3f, which consists of a graphite sleeve 41 which is flushed with $N_2$ and is heated by a high-frequency coil 43. Subsequently, the capillary tube 21 is introduced into the furnace 39, which is already at the fusion temperature of 1600 to 1800°C. Depend-

ing upon the temperature in the furnace, the time required for fusion is 1 to 10 minutes. At the correct temperature and heating time, the capillary tube 21 shrinks under the influence of the vacuum and the atmospheric pressure whilst maintaining the circular cross-section due to surface tension, the end portions 9 of the fibres are deformed into a symmetrical cross-sectional pattern of the kind shown in Fig. 3g and 3h, and the capillary tube 21 is fused with the end portions 9 of the fibres to form therewith a solid rod 45. The tube 21 is removed from the furnace and the fibres are glued with their outer coating to the funnel 25. Subsequently, the sealed end of the rod 45 is removed preferably by scribing and cleaving and the ruptured end surface of the resulting fibre head 47 is finished by grinding and polishing to form the end face 46. Fig. 3h shows the finished fibre head 47 with the end face 46. As already described above, the fused end portions 9 of the fibres have a diameter and a cross-section substantially identical in shape and size to the diameter and the cross-section of a single fibre core. Consequently, as shown diagrammatically in Fig. 3i, for assembling a splitter 52, the fibre head 47 can be directly coupled and fixed to a fibre head 48 comprising a single fibre 1 by a glue connection 49 in the manner already described, the free end of said single fibre having been inserted and fixed in a capillary tube 51 having the same external diameter as the fibre head 47. Subsequently the fibre heads 47 and 48 are inserted into a quartz envelope 53 and fixed therein by glue beads 54.

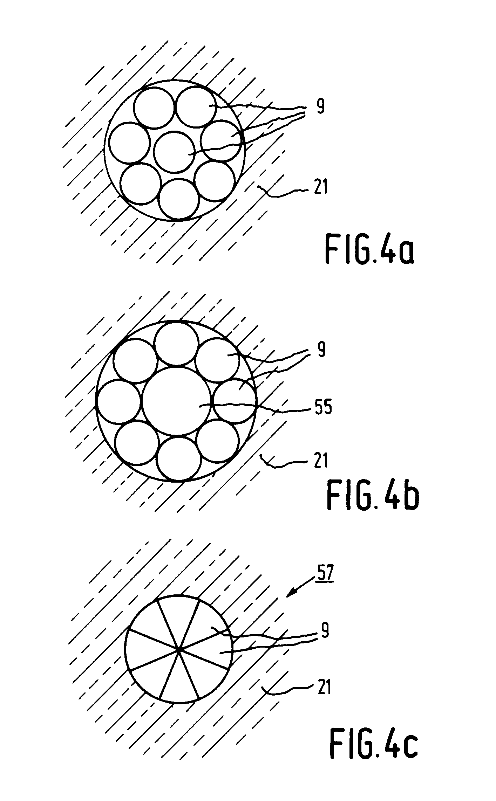

Figures 4a, 4b and 4c show the situation already illustrated, which exists during fusion of six or more fibres. It is not possible to arrange six or a larger number of fibres in a dense packing without interstices in the capillary tube 21. Fig. 4a shows that, with, for example, eight fibres the packing is loose resulting in interstices such that no fusion with a symmetrical cross-sectional pattern is obtained. As shown in Fig. 4b, this problem is obviated by arranging a temporary supporting member 55, for example a tungsten wire, at the centre of the capillary tube 21 and distributing the fibres in contact with one another around the inner circumference of the tube. By a thermal pretreatment the fibres are adhered to the inner surface of the tube 21. The supporting member 55 is then removed after which fusion is carried out, resulting in a fibre head 57 in which the fused end portions 9 of the fibres each have a sectorial cross-section.

For manufacturing fibre heads having a reduced minimum length, the capillary tube preferably is heated by means of a $CO_2$ laser. To this end the sealed capillary tube is put into rotation and a focused laser beam directed radially onto the capillary tube is displaced along the tube in the axial direction thereof. Due to the concentrated local heating of the tube the distance between the fused fibre ends and the outer coating of the fibres, i.e. the length of the bare fibre portion can be reduced considerably. A similar improvement can be obtained by using a small burner or torch, the small spot-like flame of which also enables a concentrated local heating of the capillary tube.

In the embodiment described above the sealed end of rod 45 is removed by scribing and cleaving, the ruptured end surface of the resulting fibre head 47 being finished by grinding and polishing. When after cleaving and after shortly grinding of the ruptured surface the fused fibre ends are firepolished with a small $H_2O$ burner, an end face is obtained with on the one hand a very smooth polished surface at the light transmitting area and on the other hand a relatively rough surface with good bonding properties at the bonding area.

As already set out above the present method is suited for processing graded-index fibres and step-index fibres as well. The embodiment described is dealing with the processing of multimode fibres. However, the present method is not limited to the processing of multimode fibres, as experience has shown that due to the high degree of reproducibility and precision obtained the method is also suited for processing single mode fibres.

## Claims

1. A method of manufacturing a passive fibre-optic component which comprises at least two optical fibres (1) each having a core (3) of core glass, a cladding (5) of cladding glass with a refractive index lower than that of the core glass, and an outer coating (7) in which method a part of each fibre (1) is bared by removal of the outer coating (7) over a given length from one end of the fibre (1), and the bare parts of the fibres are subjected to an etching treatment whereby a portion (11) of the etched part of each fibre is given a conical shape, after which the etched portions of the fibres are arranged against each other in a tube (21) of a glass having a refractive index lower than that of the core glass of the fibres (1), and by the application of heat the tube (21) is fused to the fibres (1) and the fibres (1) are fused together in their bare parts, the fused fibre bundle being provided with a polished end face 46, whereby

   - by the etching treatment the bare part of each fibre is also given a cylindrical end portion (9) which adjoins the conical portion (11) at the narrow end thereof,

   - the tube (21) is a capillary tube which is sealed at one end, and the tube and at least the cylindrical end portions (9) of the fibres (1) inserted therein are softened by heat while the tube (21) is evacuated so that the wall thereof collapses against the fibres and, while maintaining a circular cross-section under the influence of surface tension, deforms said end portions of the fibres (1) to eliminate the interstices between them and give these portions of the fibres collectively a circular cross-section so that they form with the tube (21) a solid rod (45) of circular cross-section, the tube (21) being fused by the heat to said end portions of the fibres,

- and the sealed end of the rod (45) is removed to form on the rod (45) an end face (46) in which the ends of said end portions (9) of the fibres are exposed, the etching of said end portions of the fibres being such that the diameter of said circular cross-section of said end portions after said deformation is substantially equal to the diameter of the core of a single fibre,
- and said end face (46) being ultimately subjected to a polishing and finishing treatment to finally obtain a fused fibre head (47).

2. A method as claimed in Claim 1, of manufacturing a fibre-optic component having at least six optical fibres (1), characterized in that the fibres are regularly distributed around the inner circumference of the capillary tube (21) and are supported there by a cylindrical supporting member (55) which is arranged centrally in the capillary tube (21), the fibres (1) being adhered with their bare cladding to the inner surface of the capillary tube (21) by a thermal pretreatment whereafter the supporting member (55) is removed and fusion of the tube (21) with the etched portions of the fibres (1) takes place.

3. A fibre-optic component comprising a fused fibre head, the fused fibre head having a circular core cross-section composed of at least two individual core sections fused together and a common cladding surrounding the composed core, each section corresponding to an etched and reduced in diameter end portion of the core of one single fibre, the diameter of the composed core being substantially equal to the diameter of the core of one single fibre, whereby each section has the same sectorial cross-section.

4. An optical splitter comprising a fused fibre head with M fibres and obtained by the method claimed in Claim 1 or 2, the end face of said fibre head being coupled to a single fibre.

5. An optical coupler comprising two fused fibre heads with M respectively N step-index fibres and obtained by the method as claimed in Claim 1 or 2, said fibre heads being joined to each other with their end face.

6. An optical coupler comprising two fused fibre heads with M respectively N graded-index fibres and obtained by the method claimed in Claim 1 or 2, said fibre heads being joined with their end face to opposite faces of a mixing element.

7. A fibre-optic component as claimed in any of the Claims 3 to 6, wherein the optical fibres are of the multi-mode type.

8. A fibre-optic component as claimed in any of the Claims 3 to 6, wherein the optical fibres are of the single mode type.

9. A fibre optical network comprising fibre-optic components as claimed in any of the Claims 3 to 8.

**Revendications**

1. Procédé de fabrication d'un composant passif de fibre optique comportant au moins deux fibres optiques (1) ayant chacune un coeur (3) en verre de coeur, une gaine (5) en verre de gaine ayant un indice de réfraction inférieur à celui du verre de coeur, et un revêtement extérieur (7), ce procédé consistant à dénuder une partie de chaque fibre (1) par enlèvement du revêtement extérieur (7) sur une longueur donnée à partir d'une extrémité de la fibre (1) et à soumettre les parties dénudées des fibres à un traitement de décapage au cours duquel on donne une forme conique à une portion (11) de la partie decapée de chaque fibre, après quoi les parties décapées des fibres sont disposées les unes contre les autres dans un tube (21) en verre ayant un indice de réfraction inférieur à celui du verre de coeur des fibres (1), et le tube (21), par apport de chaleur, est réuni aux fibres par fusion (1) et les fibres (1) sont réunies entre elles par fusion de leurs parties dénudées, le faisceau de fibres formé par fusion étant pourvu d'une face terminale polie 46, suivant lequel

- par le traitement de décapage, on donne également une partie terminale cylindrique (9) à la partie dénudée de chaque fibre, partie terminale qui est contiguë à la portion conique (11) située à l'extrémité étroite de celle-ci,

- le tube (21) est un tube capillaire fermé à l'une de ses extrémités par scellage, et le tube et au moins les parties terminales cylindriques (9) des fibres (1) introduites dans celui-ci sont adoucis par la chaleur tandis que le tube (21) est mis sous vide de façon que sa paroi s'affaisse contre les fibres et, tout en gardant une section transversale circulaire sous l'influence de la tension superficielle, elle déforme lesdites parties terminales des fibres (1) pour éliminer les interstices situés entre elles et pour donner collectivement une section transversale circulaire à ces parties des fibres de manière qu'elles forment avec le tube (21) une barre solide (45) de section transversale circulaire, le tube (21) étant réuni par fusion auxdites parties terminales des fibres sous l'effet de la chaleur,

- et l'extrémité de la barre (45) fermée par scellage est enlevée pour former sur la barre (45) une face terminale (46) dans laquelle les extrémités desdites parties terminales (9) des fibres sont à nu, le décapage desdites parties terminales des fibres étant tel que, après ladite déformation, le diamètre de ladite section transversale circulaire desdites parties terminales est à peu près égal au diamètre du coeur d'une seule fibre,

- et ladite face terminale (46) étant enfin soumise à un traitement de polissage et de finissage pour obtenir finalement une tête de fibre formée par fusion (47).

2. Procédé selon la revendication 1, pour la fabrication d'un composant de fibre optique ayant au moins six fibres optiques (1), caractérisé en ce que les fibres sont réparties régulièrement autour de la circonférence intérieure du tube capillaire (21) et en ce qu'elles sont supportées à cet endroit par un élément de support cylindrique (55) disposé en position centrale dans le tube capillaire (21), les fibres (1) étant amenés à adhérer par leur gaine dénudée à la surface intérieure du tube capillaire (21) par un prétraitement thermique, après quoi l'élément de support (55) est enlevé et le tube (21) et les parties décapées des fibres (1) sont réunies par fusion.

3. Composant de fibre optique comportant une tête de fibre formée par fusion, la tête de fibre formée par fusion ayant une section transversale de coeur circulaire composée d'au moins deux sections de coeur individuelles formées par fusion et une gaine commune entourant le coeur composé, chaque section correspondant à une partie terminale décapée et réduite en diamètre du coeur d'une seule fibre, le diamètre du coeur composé étant sensiblement égal au diamètre du coeur d'une seule fibre, chaque section ayant la même section transversale sectorielle.

4. Diviseur optique comportant une tête de fibre formée par fusion ayant M fibres et obtenue par la mise en oeuvre du procédé selon la revendication 1 ou 2, la face terminale de ladite tête de fibre étant couplée à une seule fibre.

5. Coupleur optique comportant deux têtes de fibre formées par fusion, ayant respectivement M et N fibres à indice à gradins et obtenues par la mise en oeuvre du procédé selon la revendication 1 ou 2, lesdites têtes de fibre étant jointes les unes aux autres avec leurs faces terminales.

6. Coupleur optique comportant deux têtes de fibre formées par fusion ayant respectivement M et N fibres à gradient d'indice et obtenues par la mise en oeuvre du procédé selon la revendication 1 ou 2, lesdites têtes de fibre étant jointes par leurs faces terminales à des faces opposées d'un élément mélangeur.

7. Composant de fibre optique selon l'une quelconque des revendications 3 à 6, dans lequel les fibres optiques sont du type multimode.

8. Composant de fibre optique selon l'une quelconque des revendications 3 à 6 suivant lequel les fibres optiques sont du type monomode.

9. Réseau optique à fibres comportant des composants de fibre optique selon l'une quelconque des revendications 3 à 8.

**Patentansprüche**

1. Verfahren zum Herstellen einer passiven faseroptischen Komponente mit mindestens zwei optischen Fasern (1) mit je einem Kern (3) aus Kernglas, einem Mantel (5) aus Mantelglas mit einer Brechzahl, die kleiner ist als die des Kernglases, und mit einer Außenverkleidung (7), wobei in diesem Verfahren ein Teil jeder Faser freigelegt wird durch Entfernung des Außenverkleidung (7) über eine bestimmte Länge von einem Ende der Faser (1), und wobei die freigelegten Teile der Fasern einer Ätzbehandlung ausgesetzt werden, wodurch ein Teil (11) des geätzten Teils jeder Faser kegelförmig ausgebildet wird, wonach die geätzten Teile der Fasern in einer Röhre (21) aus einem Glas mit einer Brechzahl, die niedriger ist als die des Kernglases der Fasern (1) gegeneinander gelegt werden, und wobei durch Zuführung von Wärme zu der Röhre (21) diese mit den Fasern (1) verschmolzen wird und die Fasern (1) an ihren freigelegten Enden miteinander verschmolzen werden, wobei das verschmolzene Faserbündel mit einer polierten Endfläche (46) versehen wird, wobei:

- durch die Ätzbehandlung der freigelegte Teil jeder Faser ebenfalls einen zylinderförmigen Endteil (9) erhält, der sich an den engeren Teil des kegelförmigen Teils (11) anschließt,
- die Röhre (21) eine an einem Ende zugeschmolzene Kapillarröhre ist, wobei die Röhre und mindestens die zylinderförmigen Endteile (9) der darin steckenden Fasern (1) durch Wärme erweicht werden, indem die Röhre (21) evakuiert wird, so daß die Wand derselben zu den Fasern kollabiert und unter Beibehaltung eines kreisförmigen Querschnitts unter dem Einfluß von Oberflächenspannung die genannten Endteile der Fasern verformt um die Räume zwischen denselben auszugleichen und diesen Teilen der Fasern insgesamt einen kreisförmigen Querschnitt zu erteilen, so daß sie mit der Röhre (21) einen massiven Stab (45) kreisförmigen Querschnitts bilden, wobei die Röhre (21) durch die den Endteilen der Fasern zugeführte Wärme zugeschmolzen wird,
- und das abgedichtete Ende des Stabes (45) entfernt wird, damit an dem Stab (45) eine Endfläche (46) gebildet werden kann, in der die Enden der genannten Endteile (9) der Fasern sichtbar werden, wobei das Ätzen der genannten Endteile der Fasern derart ist, daß der Durchmesser des genannten kreisförmigen Querschnitts der genannten Endteile nach der genannten Verformung dem Durchmesser des Kerns einer einzigen Faser nahezu entspricht,
- und die genannte Endfläche (46) letzten Endes einer Polier- und Endbearbeitungsbehandlung ausgesetzt wird zum Erhalten eines verschmolzenen Faserkopfes (47).

2. Verfahren nach Anspruch 1 zum Herstellen einer faseroptischen Komponente mit mindestens sechs optischen Fasern (1), dadurch gekennzeichnet, daß die Fasern regelmäßig am Innenumfang der Kapillarröhre (21) verteilt sind und an dieser Stelle durch ein zylinderförmiges Tragelement (55) unterstützt werden, das in der Kapillarröhre (21) zentral angeordnet ist, wobei die Fasern (1) durch eine thermische Vorbehandlung mit ihrem freigelegten Mantel an der Innenfläche der Kapillarröhre (21) angeordnet sind, wonach das Tragelement (55) entfernt wird und Verschmelzung der Röhre (21) mit den geätzten Endteilen der Fasern (1) erfolgt.

3. Faseroptische Komponente mit einem verschmolzenen Faserkopf, der einen kreisförmigen Querschnitt des Kerns aufweist, der aus mindestens zwei einzelnen zusammengeschmolzenen Kernteilen und einem den zusammengesetzten Kern umgebenden Mantel zusammengesetzt ist, wobei jeder Teil einem geätzten und im Durchmesser verringerten Endteil des Kerns einer einzigen Faser entspricht, wobei der Durchmesser des zusammengesetzten Kerns dem Durchmesser des Kerns einer einzigen Faser nahezu entspricht, wobei jeder Teil denselben Querschnitt hat.

4. Qptischer Splitter mit einem verschmolzenen Faserkopf mit M Fasern, erhalten durch das Verfahren nach Anspruch 1 oder 2, wobei die Endfläche des genannten Faserkopfes mit einer einzigen Faser gekoppelt ist.

5. Optokoppler mit zwei verschmolzenen Faserköpfen mit M bzw. N-Stufenfasern und erhalten durch das Verfahren nach Anspruch 1 oder 2, wobei diese Faserköpfe mit ihren Endflächen zusammengefügt wurden.

6. Optokoppler mit zwei verschmolzenen Faserköpfen mit M- bzw. N-Gradientenfasern und erhalten durch das Verfahren nach Anspruch 1 oder 2, wobei diese Faserköpfe mit ihren Endflächen an gegenüberliegenden Flächen eines Mischelementes zusammengefügt wurden.

7. Faseroptische Komponente nach einem der Ansprüche 3 bis 6, wobei die optischen Fasern vom Multimode-Typ sind.

8. Faseroptische Komponente nach einem der Ansprüche 3 bis 6, wobei die optischen Fasern vom Singlemode-Typ sind.

9. Faseroptisches Netzwerk mit faseroptischen Komponenten nach einem der Ansprüche 3 bis

8.

FIG.1a

FIG.1b

FIG.2a

FIG.2b

FIG.2c

FIG.3a

FIG.3b

FIG.3c

FIG.3d

FIG.3e

FIG.3f

FIG.3g

FIG.3h

FIG.3i

FIG.4a

FIG.4b

FIG.4c